# EUROPÄISCHE PATENTSCHRIFT

(11) **EP 2 441 215 B1**
(45) Veröffentlichungstag und Bekanntmachung des Hinweises auf die Patenterteilung: **16.09.2015**
(21) Anmeldenummer: 10725984.8
(22) Anmeldetag: 02.06.2010
(51) Int. Cl.: H04L 12/40, H04L 12/10

(54) **VORRICHTUNG ZUR ÜBERTRAGUNG VON DATEN ZWISCHEN EINEM SERIELLEN DATENBUS UND ARBEITSMODULEN, WIE AKTORMODULEN UND/ODER E/A-MODULEN**
DEVICE FOR TRANSMITTING DATA BETWEEN A SERIAL DATA BUS AND WORKING MODULES, SUCH AS ACTUATOR MODULES AND/OR I/O MODULES
DISPOSITIF DE TRANSMISSION DE DONNÉES ENTRE UN BUS DE DONNÉES SÉRIE ET DES MODULES DE TRAVAIL TELS QUE MODULES ACTIONNEURS ET/OU MODULES E/S

(30) Priorität: 17.07.2009 DE 102009033691
(43) Veröffentlichungstag der Anmeldung: 18.04.2012
(73) Patentinhaber: FESTO AG & Co. KG, 73734 Esslingen (DE)
(72) Erfinder: GRÄFF, Uwe, 73760 Ostfildern (DE)
(74) Vertreter: Patentanwälte Magenbauer & Kollegen Partnerschaft mbB
(86) Internationale Anmeldenummer: PCT/EP2010/003357
(87) Internationale Veröffentlichungsnummer: WO 2011/006558

(56) Entgegenhaltungen:
- WO-A2-2007/012014
- US-A- 5 841 360
- Balluff GmbH: "IO-Link, System Components for Industrial Communication" Full CatalogueNr. 862617, 31. Juli 2008 (2008-07-31), Seiten 1-24, XP002593081 Gefunden im Internet: URL:http://www.balluff.com/NR/rdonlyres/F9 187A45-9D63-478F-93D0-2CC7909B4F78/0/BR_85 5628_EN.pdf [gefunden am 2010-07-21]
- IO-Link Consortium: "IO-Link Communication Specification, Version 1.0" Bd. IOL-09-0001, Nr. 10.002, 31. Januar 2009 (2009-01-31), Seiten 1-134, XP002593082 Haid-und-Neu-Str. 7, 76131 Karlsruhe, Germany Gefunden im Internet: URL:http://www.io-link.com/share/Downloads /IOL-Comm-Spec_10002_V10_090118.pdf [gefunden am 2010-07-21]

## Beschreibung

Eine derartige Vorrichtung eignet sich insbesondere zur Ansteuerung von Ventilbatterien mittels eines Datenbusses.

Aus der DE 42 30 414 C2 ist eine elektro-pneumatische Steuereinrichtung bekannt, bei der über einen Datenbus mehrere jeweils mit Arbeitsmodulen versehene Ventile angesteuert werden können. Alle Arbeitsmodule sind dabei parallel an den Datenbus angeschlossen und wandeln die seriellen Daten des Datenbusses in Steuersignale, insbesondere parallele Steuersignale für die jeweiligen Ventile um. Insbesondere bei einer größeren Anzahl von Ventilen bzw. Ventilbatterien ist eine derartige Anordnung wenig variabel, vor allem auch dann, wenn weitere Arbeitsmodule mit anderen Funktionen vom gleichen Datenbus aus gesteuert werden sollen oder mit diesem kommunizieren sollen.

Aus der US 2005/0288799 A1 ist eine Vorrichtung zur Übertragung von Daten bekannt, bei der eine Vielzahl von Sensoren ihre Daten über einen Datenbus beispielsweise an einen Mikrocomputer übertragen können. Als Kommunikationsprotokoll für das Bussystem können beispielsweise das HART-Protokoll, das FOUNDATION-Feldbusprotokoll und das Profibus-PA-Protokoll genutzt werden. Dabei kann über den Datenbus auch eine Energieversorgung der angeschlossenen Sensoren vorgesehen werden. Ergänzend zu den Sensoren können auch Aktoren an den Datenbus angeschlossenen werden.

Das Dokument Balluff GmbH: "IO-Link, System Components for Industrial Communication"Full Catalogue Nr. 862617, 31. Juli 2008 (2008-07-31), Seiten 1-24, XP002593081 offenbart ein IO-Link industrielles Automatisierungs-Feldbussystem. Dabei verbindet ein Profibus IO-Link Gateway einen IO-Link Sensor-Hub, der über einen IO-Link M12-Stecker zusätzlich mit Strom versorgt wird. Der IO-Link Sensor-Bus besteht aus 16 Eingängen und 8 Ein-/Ausgabeports mit M12-Buchsen.

Eine Aufgabe der vorliegenden Erfindung besteht darin, eine derartige Datenübertragungsvorrichtung variabler zu gestalten, so dass über einen einzelnen Datenbus eine Steuerung und Kommunikation mit unterschiedlichen Arbeitsmodulen auf einfache kostengünstige Weise möglich ist.

Diese Aufgabe wird erfindungsgemäß durch eine Vorrichtung zur Übertragung von Daten mit den Merkmalen des Anspruches 1 gelöst.

Die Vorteile der erfindungsgemäßen Vorrichtung liegen insbesondere darin, dass sich im Vergleich zu dem bekannten Stand der Technik die einzelnen Schnittstellen bzw. Kommunikationsanschlüsse optimiert auf die notwendige Kommunikations- und Spannungsversorgungsleistung der Arbeitsmodule anpassen lassen, z.B. Baudrate und dergleichen. Daraus resultiert eine kostengünstige Auslegung der Verbindungselemente, beispielsweise Steckverbinder, für die Kommunikationsanschlüsse und der internen Elektronik für die serielle Kommunikation. Darüber hinaus ist eine variable und kompakte Anordnung der Arbeitsmodule möglich.

Durch die in den Unteransprüchen aufgeführten Maßnahmen sind vorteilhafte Weiterbildungen und Verbesserungen der im Anspruch 1 angegebenen Vorrichtung möglich.

Die seriellen Verbindungen zwischen dem Hub und den Arbeitsmodulen sind bevorzugt als Punkt-Zu-Punkt-Verbindungen ausgebildet, insbesondere als IO-Link-Verbindungen, wobei der Hub insbesondere als IO-Link-Master und der jeweilige Seriell-Parallel-Wandler in den Arbeitsmodulen als IO-Link-Slave ausgebildet ist.

Die Kommunikationsanschlüsse sind zweckmäßigerweise als Steckverbindungen zum Anstecken der Arbeitsmodule an das Busmodul ausgebildet, wobei die Kommunikationsanschlüsse vorzugsweise in einem linearen Raster angeordnet sind. Hierdurch können die Arbeitsmodule, insbesondere auch unterschiedliche Arbeitsmodule, in nahezu beliebiger Weise angesteckt werden.

Wenigstens eines der als Aktor- und/oder E/A-Module ausgebildeten Arbeitsmodule besitzt in vorteilhafter Weise Anschlussmittel zum Anschließen und/oder Anstecken einer wenigstens einen Aktor aufweisenden Aktoranordnung, die vorzugsweise als Ventilbatterie ausgebildet ist. Hierdurch kann die Vorrichtung in einfacher und variabler Weise durch Zusammenstecken von Busmodul, Arbeitsmodulen und Aktoranordnungen aufgebaut bzw. zusammen gestellt werden.

In vorteilhafter Weise besitzt auch wenigstens eines der als Aktor- und/oder E/A-Module ausgebildeten Arbeitsmodule wenigstens eine E/A-Schnittstelle, die vorzugsweise als Steckkontaktanordnung ausgebildet ist. An solchen Schnittstellen können dann externe Bauteile und Baugruppen angeschlossen werden, wie Sensoren, Schalter oder externe Aktoren. Solche E/A-Schnittstellen sind zweckmäßigerweise als parallele Schnittstellen ausgebildet.

Wenigstens eines der Arbeitsmodule kann bevorzugt auch als Funktionsmodul ausgebildet sein, insbesondere als Sensormodul.

Ausführungsbeispiele der Erfindung sind in der Zeichnung dargestellt und in der nachfolgenden Beschreibung näher erläutert. Es zeigen:
- Fig. 1: ein schematisches Blockschaltbild einer Vorrichtung, bei der an ein Busmodul zwei Aktor- und E/A-Module angesteckt bzw. angeschlossen sind, als Ausführungsbeispiel der Erfindung,
- Fig. 2: die in Fig. 1 dargestellte Vorrichtung als reale Ausführung in einer perspektivischen Darstellung,
- Fig. 3: die in Fig. 2 dargestellte Vorrichtung in einer perspektivischen Explosionsdarstellung,
- Fig. 4: ein zweites Ausführungsbeispiel der Erfindung, bei dem an ein Busmodul ein Aktor- und E/A-Modul sowie ein Funktionsmodul angesteckt bzw. angeschlossen ist, in einer perspektivischen Darstellung und
- Fig. 5: das in Fig. 4 dargestellte Ausführungsbeispiel in einer perspektivischen Explosionsdarstellung.

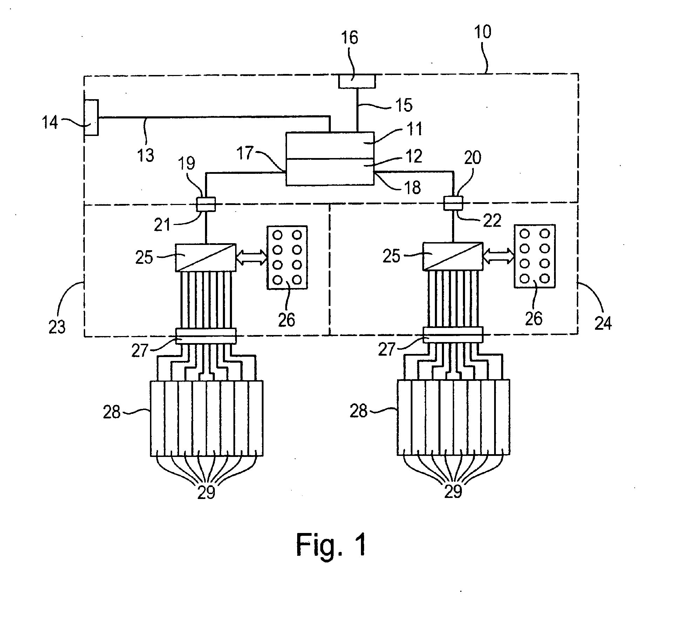

Bei dem in den Fig. 1 bis 3 dargestellten ersten Ausführungsbeispiel enthält ein Busmodul 10 einen Busknoten 11 (Busstation), der mit einem Hub 12 verbunden ist oder zusammen mit diesem eine integrierte Anordnung bildet. An das Busmodul 10 ist ein Datenbus 13, beispielsweise ein Feldbus, angeschlossen, der über eine Busschnittstelle 14 mit einem entsprechenden externen Datenbus verbindbar ist, so dass das Busmodul 10 mit einer externen Zentrale oder Steuereinrichtung verbunden werden kann. Weiterhin sind Spannungsversorgungsleitungen 15 an das Busmodul 10 angeschlossen, die über einen Spannungsanschluss 16 mittels eines nicht dargestellten externen Kabels mit Spannung versorgt werden können.

Zwei Ports 17, 18 des Hub 12 sind mit zwei Kommunikationsanschlüssen 19, 20 an einer Außenseite des Busmoduls 10 verbunden, wobei es sich um serielle Ports 17, 18 handelt. Die Zahl der Ports 17, 18 und die entsprechende Zahl von Kommunikationsanschlüssen 19, 20 kann selbstverständlich auch größer sein und variieren.

An den Kommunikationsanschlüssen 19, 20 sind über Steckverbinder 21, 22 zwei Arbeitsmodule 23, 24 angeschlossen bzw. angesteckt, die als Aktor- und E/A-Module ausgebildet sind. Jedes Arbeitsmodul enthält einen Seriell-Parallel-Wandler 25, der die über die Kommunikationsanschlüsse 19, 20 geleiteten seriellen Signale in parallele Signale umwandelt. Die seriellen Verbindungen zwischen dem Hub 12 und den Seriell-Parallel-Wandlern 25 sind als Punkt-Zu-Punk-Verbindungen ausgebildet, beispielsweise als IO-Link-Verbindungen. Im letzteren Fall ist der Hub 12 als IO-Link-Master und sind die Seriell-Parallel-Wandler 25 als IO-Link-Slaves ausgebildet. Prinzipiell sind auch andere Punkt-Zu-Punkt-Verbindungen möglich oder auch andere serielle Verbindungsarten.

An Stelle der Steckverbinder 21, 22 können auch entsprechende Stecker fest an den Arbeitsmodulen 23, 24 angeordnet sein, die in die als Buchsen ausgebildeten Kommunikationsanschlüssen 19, 20 einsteckbar sind oder diese Kommunikationsanschlüsse 19, 20 sind als Stecker ausgebildet, um in entsprechende Buchsen der Arbeitsmodule 23, 24 eingesteckt zu werden.

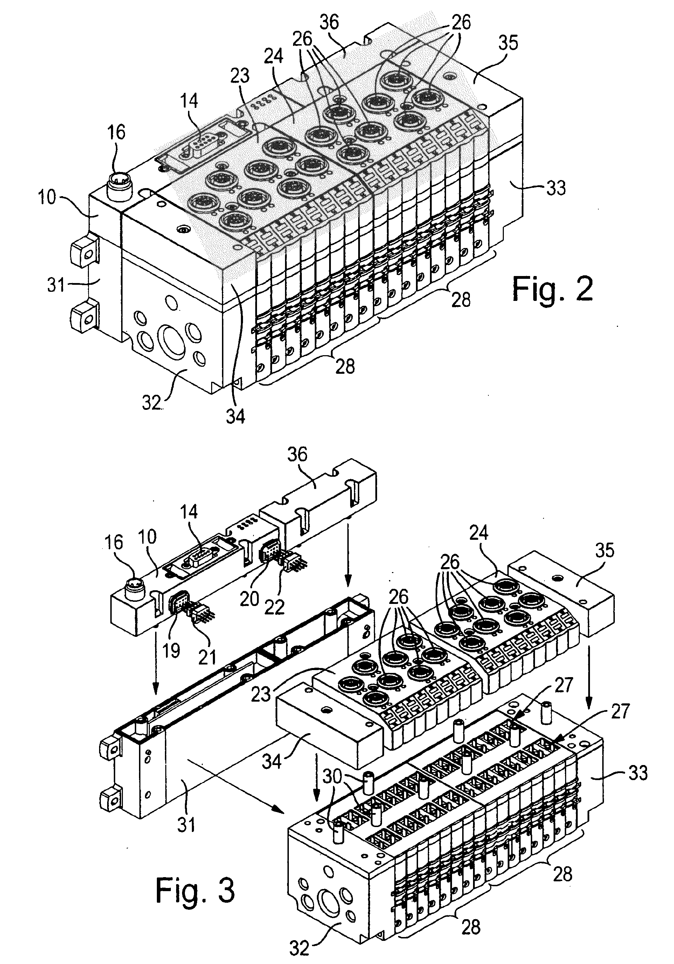

Die Arbeitsmodule 23, 24 weisen an der Oberseite gemäß den Fig. 2 und 3 als Steckkontaktanordnungen ausgebildete E/A-Schnittstellen 26 auf, die jeweils mit parallelen Ports der Seriell-Parallel-Wandler 25 verbunden sind. Weiterhin besitzen die Arbeitsmodule 23, 24 an den Unterseiten Steckverbindungsanschlüsse 27 zur elektrischen Verbindung mit Ventilbatterien 28, die jeweils im Ausführungsbeispiel acht aneinander gereihte Plattenventile 29 aufweisen. Zum sicheren mechanischen Aufstecken der Arbeitsmodule 23, 24 auf die Ventilbatterien 28 sind noch entsprechende mechanische Steckverbindungselemente 30 gesehen. Dabei sind auch andere mechanische Befestigungsmöglichkeiten realisierbar, z.B. Schraubeverbindungen, Rastverbindungen oder dergleichen. Die Plattenventile 29 sind jeweils elektrisch über die Steckverbindungsanschlüsse 27 mit entsprechenden parallelen Ports der Seriell-Parallel-Wandler 25 verbunden.

Der Datenbus 13 kann somit über den Busknoten 11, den Hub 12 und die Seriell-Parallel-Wandler 25 mit den E/A-Schnittstellen 26 und den Plattenventilen 29 kommunizieren bzw. diese steuern.

Die Zahl der an das Busmodul 10 angeschlossenen Arbeitsmodule 23, 24 kann auch größer sein, wenn eine entsprechend größere Anzahl von Kommunikationsanschlüssen 19, 20 vorgesehen ist. Dabei können anstelle von kombinierten Aktor- und E/A-Modulen als Arbeitsmodule 23, 24 auch reine Aktormodule und/oder reine E/A-Module treten. Anstelle von Ventilbatterien 28 bzw. Plattenventilen 29 oder anderen Ventilen können auch andere Aktoren oder unterschiedliche Aktoren an die Arbeitsmodule 23, 24 angeschlossen werden. Über die Schnittstellen 26 können externe Aktoren gesteuert, Sensorsignale über entsprechende Sensorleitungen empfangen oder sonstige Kommunikationsvorgänge abgewickelt werden.

Über Verbindungsleitungen zwischen dem Hub 12 einerseits und den Seriell-Parallel-Wandlern 25 andererseits werden auch die erforderlichen Versorgungs- und Betriebsspannungen zugeführt, zum einen zum Betrieb der angeschlossenen Aktoren und zum anderen zur Spannungsversorgung externer Einrichtungen über die Schnittstellen 26, sofern dies erforderlich ist.

Zum mechanischen Aufbau bzw. Zusammenbau der gesamten Anordnung ist ein plattenartiges Montageelement 31 vorgesehen, auf das das Busmodul 10 aufsetzbar und befestigbar ist. Dabei kann das Busmodul 10 in Abweichung des Ausführungsbeispiels auch zusammen mit dem Montageelement 31 ein integriertes Montageelement bilden, das gleichzeitig das Busmodul bildet. An der Flachseite des Montageelements 31 sind die beiden Ventilbatterien 28 montiert bzw. befestigbar, wobei die Endbereiche der aneinander gereihten Ventilbatterien 28 durch Abschlusselemente 32, 33 abgedeckt sind. Diese Abschlusselemente 32, 33 können ebenfalls am Montageelement 31 befestigt, beispielsweise angeschraubt sein. Auf den Ventilbatterien 28 sind die beiden Arbeitsmodule 23, 24 aufgesetzt und elektrisch über die Steckverbindungsanschlüsse 27 mit den Plattenventilen 29 bzw. Ventilen der Ventilbatterien 28 verbunden, wobei mechanische Steckverbindungselemente 30 zur besseren mechanischen Verbindung vorhanden sind. Auch die beiden aneinander gereihten Arbeitsmodule 23, 24 sind wiederum an beiden Enden mit Abschlusselementen 34, 35 versehen, die auf den Abschlusselementen 32, 33 der Ventilbatterien 28 aufgesetzt und befestigbar sind. Bei dieser Anordnung ist auch das Busmodul 10 über die Kommunikationsanschlüsse 19, 20 und Steckverbindungen 21, 22 elektrisch mit den beiden Arbeitsmodulen 23, 24 verbunden.

Im Ausführungsbeispiel ist das Busmodul 10 kürzer als das Montageelement 31 ausgebildet, so dass eine Längenanpassung durch ein Verlängerungselement 36 erfolgt. Das die Länge des Busmoduls 10 vergrößernde Verlängerungselement 36 kann selbstverständlich auch einstückig mit dem Busmodul 10 ausgebildet sein.

Die Befestigung der beschriebenen Bauteile und Baugruppen untereinander kann selbstverständlich variabel erfolgen. Die aneinander gereihten Arbeitsmodule 23, 24 können sich in ihrer Funktion auch unterscheiden, wobei die Zahl der aneinander gereihten Arbeitsmodule 23, 24 von der Zahl der Kommunikationsanschlüsse 19, 20 abhängt. Die Breite der Arbeitsmodule 23, 24 kann ebenfalls variieren, wobei lediglich darauf zu achten ist, dass das Raster der Kommunikationsanschlüsse 19, 20 berücksichtigt wird.

Die elektrischen Verbindungen der Arbeitsmodule 23, 24 mit dem Busmodul 10 werden beim Zusammenstecken der jeweiligen Schmalseiten hergestellt. Die Art dieser Steckverbindungen kann jedoch auch variieren, beispielsweise können sich die Arbeitsmodule 23, 24 und das Busmodul 10 stufenartig überlappen, so dass sich die Steckrichtung um 90° ändert.

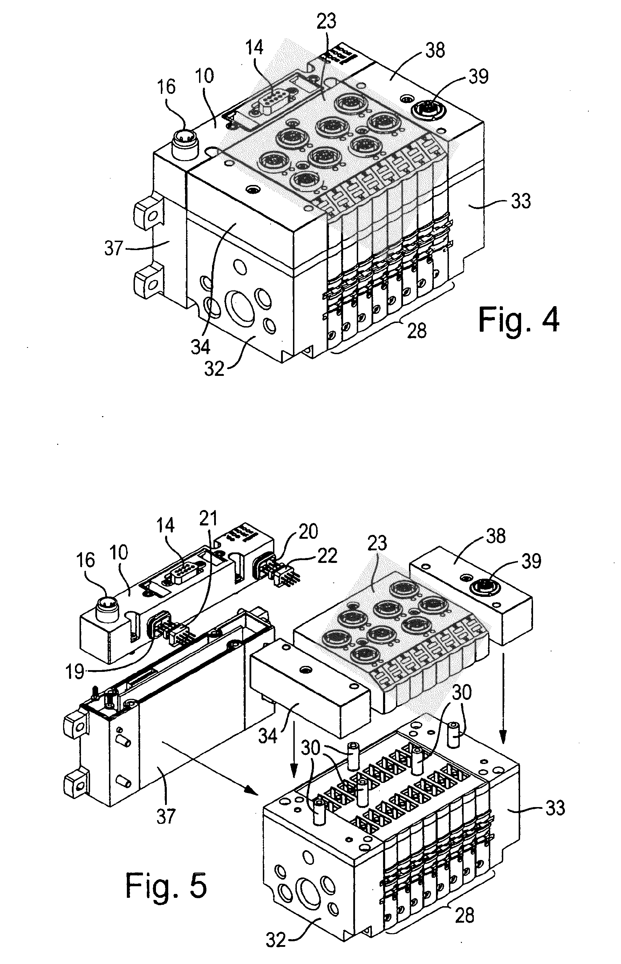

Bei dem in den Fig. 4 und 5 dargestellten zweiten Ausführungsbeispiel ist lediglich ein Arbeitsmodul 23 und eine Ventilbatterie 28 vorgesehen. Ein verkürztes plattenartiges Montageelement 37 ist in seiner Länge an die des Busmoduls 10 angepasst. In Reihe zum Arbeitsmodul 23 ist ein Funktionsmodul 38 angeordnet, das beispielsweise als Sensormodul zur Erfassung des Drucks, der Temperatur und der gleichen und/oder als Aktormodul ausgebildet sein kann. In der Ausbildung als Aktormodul kann es z.B. als Ventil ausgebildet sein bzw. wenigstens ein solches enthalten, wie ein Proportionalventil, ein Softstartventil oder dergleichen. Dieses Funktionsmodul 38 ist über den Steckverbinder 22 mit dem Kommunikationsanschluss 20 elektrisch verbunden. Über eine als Steckverbindungsanschluss ausgebildete Schnittstelle 39 am Funktionsmodul 38 ist eine Kommunikation mit externen Einrichtungen möglich, beispielsweise mit Aktoren und/oder Sensoren.

Auch bei diesem Ausführungsbeispiel ist die Zahl der Arbeitsmodule 23 und Funktionsmodule 38 beliebig und auch ihre Reihenfolge kann entsprechend der Anordnung der Kommunikationsanschlüsse 19, 20 nahezu beliebig gewählt werden.

## Patentansprüche

1. Vorrichtung zur Übertragung von Daten zwischen einem seriellen Datenbus (13) und Arbeitsmodulen (23, 24, 38), wobei der Datenbus (13) an einen Busknoten (11) in einem Busmodul (10) angeschlossen ist, das wenigstens zwei serielle Kommunikationsanschlüsse (19, 20) aufweist, die mit Ports (17, 18) eines Hubs (12) verbunden sind, wobei der Hub (12) mit dem Busknoten (11) verbunden ist, wobei die Kommunikationsanschlüsse (19, 20) zum Anschluss der Arbeitsmodule (23, 24, 38) und zur Spannungsversorgung derselben ausgebildet sind, und wobei wenigstens eines der Arbeitsmodule (23, 24) als Aktormodul und/oder als E/A-Modul ausgebildet ist und einen Seriell-Parallel-Wandler (25) enthält, der zum parallelen Anschluss von Aktoren (28), die mit dem jeweiligen Arbeitsmodul (23, 24) verbunden sind, und/oder von E/A-Schnittstellen (26), die das jeweilige Arbeitsmodul (23, 24) aufweist, ausgebildet ist, **dadurch gekennzeichnet, dass** die Kommunikationsanschlüsse (19, 20) auf die notwendige Kommunikations- und Spannungsversorgungsleistung der Arbeitsmodule angepasst sind.

2. Vorrichtung nach Anspruch 1, **dadurch gekennzeichnet, dass** die seriellen Bindungen zwischen dem Hub (12) und den Arbeitsmodulen (23, 24, 38) als Punkt-Zu-Punkt-Verbindungen ausgebildet sind.

3. Vorrichtung nach Anspruch 2, **dadurch gekennzeichnet, dass** die Punkt-Zu-Punkt-Verbindungen als IO-Link-Verbindungen ausgebildet sind, wobei der Hub (12) insbesondere als IO-Link-Master und der jeweilige Seriell-Parallel-Wandler (25) in den Arbeitsmodulen (23, 24) insbesondere als IO-Link-Slave ausgebildet ist.

4. Vorrichtung nach einem der vorhergehenden Ansprüche, **dadurch gekennzeichnet, dass** die Kommunikationsanschlüsse (19, 20) als Steckverbindungen zum Anstecken der Arbeitsmodule (23, 24, 38) an das Busmodul (10) ausgebildet sind.

5. Vorrichtung nach Anspruch 4, **dadurch gekennzeichnet, dass** die Kommunikationsanschlüsse (19, 20) in einem linearen Raster angeordnet sind.

6. Vorrichtung nach einem der vorhergehenden Ansprüche, **dadurch gekennzeichnet, dass** wenigstens eines der als Arbeits- und/oder E/A-Module ausgebildeten Arbeitsmodule (23, 24) Anschlussmittel (27) zum Anschluss und/oder Anstecken einer wenigstens einen Aktor (29) aufweisenden Aktoranordnung (28) besitzt.

7. Vorrichtung nach Anspruch 6, **dadurch gekennzeichnet dass** die Aktoranordnung (28) eine Ventilbatterie ist.

8. Vorrichtung nach einem der vorhergehenden Ansprüche, **dadurch gekennzeichnet, dass** wenigstens eines der als Aktor- und/oder E/A-Module ausgebildeten Arbeitsmodule (23, 24) wenigstens E/A-Schnittstelle (26) besitzt.

9. Vorrichtung nach Anspruch 8, **dadurch gekennzeichnet, dass** die wenigstens eine E/A-Schnittstelle (26) als Steckkontaktanordnung ausgebildet ist.

10. Vorrichtung nach Anspruch 8 oder 9, **dadurch gekennzeichnet, dass** die wenigstens eine E/A-Schnittstelle (26) als parallele Schnittstelle ausgebildet ist.

11. Vorrichtung nach einem der vorhergehenden Ansprüche, **dadurch gekennzeichnet, dass** wenigstens eines der Arbeitsmodule (38) als Funktionsmodul ausgebildet ist.

12. Vorrichtung nach Anspruch 11, **dadurch gekennzeichnet, dass** das wenigstens eine als Funktionsmodul ausgebildete Arbeitsmodul (38) ein Sensor- und/oder Aktormodul ist.

13. Vorrichtung nach Anspruch 11 oder 12, **dadurch gekennzeichnet, dass** das wenigstens eine als Funktionsmodul ausgebildete Arbeitsmodul (38) eine Schnittstelle (39) zur Verbindung mit externen Einrichtungen besitzt.

## Claims

1. Device for transmitting data between a serial data bus (13) and working modules (23, 24, 38), wherein the data bus (13) is connected to a bus node (11) in a bus module (10) having at least two serial communication ports (19, 20) which are connected to ports (17, 18) of a hub (12), wherein the hub (12) is connected to the bus node (11), wherein the communication ports (19, 20) are designed for the connection of the working modules (23, 24, 38) and for the voltage supply thereof, and wherein at least one of the working modules (23, 24) is designed as an actuator module and/or as an I/O module and comprises a serial-to-parallel converter (25) designed for the parallel connection of actuators (28) connected to the respective working module (23, 24) and/or of I/O interfaces (26) of the respective working module (23, 24), **characterised in that** the communication ports (19, 20) are adapted to the required communication and voltage supply performance of the working modules.

2. Device according to claim 1, **characterised in that** the serial connections between the hub (12) and the working modules (23, 24, 38) are designed as point-to-point links.

3. Device according to claim 2, **characterised in that** the point-to-point links are designed as I/O links, the hub (12) being in particular designed as an I/O link master and the respective serial-to-parallel converter (25) in the working modules (23, 24, 38) being in particular designed as an I/O link slave.

4. Device according to any of the preceding claims, **characterised in that** the communication ports (19, 20) are designed as plug-and-socket connectors for plugging the working modules (23, 24, 38) to the bus module (10).

5. Device according to claim 4, **characterised in that** the communication ports (19, 20) are arranged in a linear grid.

6. Device according to any of the preceding claims, **characterised in that** at least one of the working modules (23, 24) designed as actuator and/or I/O modules comprises connecting means (27) for connecting and/or plugging on an actuator assembly (28) comprising at least one actuator (29).

7. Device according to claim 6, **characterised in that** the actuator assembly (28) is a valve bank.

8. Device according to any of the preceding claims, **characterised in that** at least one of the working modules (23, 24) designed as actuator and/or I/O modules comprises at least one I/O interface (26).

9. Device according to claim 8, **characterised in that** the at least one I/O interface (26) is designed as a plug contact arrangement.

10. Device according to claim 8 or 9, **characterised in that** the at least one I/O interface (26) is designed as a parallel interface.

11. Device according to any of the preceding claims, **characterised in that** at least one of the working modules (38) is designed as a functional module.

12. Device according to claim 11, **characterised in that** the at least one working module (38) designed as a functional module is a sensor and/or actuator module.

13. Device according to claim 11 or 12, **characterised in that** the at least one working module (38) designed as a functional module comprises an interface (39) for connection to external devices.

## Revendications

1. Dispositif de transmission de données entre un bus de données série (13) et des modules de travail (23, 24, 38), le bus de données (13) étant branché à un noeud de bus (11) dans un module de bus (10) qui comprend au moins deux branchements de communication série (19, 20) qui sont reliés à des ports (17, 18) d'un concentrateur (12), le concentrateur (12) étant relié au noeud de bus (11), les branchements de communication (19, 20) étant conçus pour le branchement des modules de travail (23, 24, 38) et pour l'alimentation électrique desdits modules de travail, et au moins un des modules de travail (23, 24) étant conçu en tant que module actionneur et/ou en tant que module d'E/S et contenant un convertisseur série-parallèle (25) qui est conçu pour le branchement parallèle d'actionneurs (28), qui sont reliés au module de travail respectif (23, 24), et/ou d'interfaces d'E/S (26) qui comprennent le module de travail respectif (23, 24), **caractérisé en ce que** les branchements de communication (19, 20) sont adaptés à la puissance de communication et d'alimentation électrique nécessaire des modules de travail.

2. Dispositif selon la revendication 1, **caractérisé en ce que** les liens série entre le concentrateur (12) et les modules de travail (23, 24, 38) sont conçus en tant que connexions point à point.

3. Dispositif selon la revendication 2, **caractérisé en ce que** les connexions point à point sont conçues en tant que connexions de liaisons d'E/S, le concentrateur (12) étant conçu en particulier en tant que maître d'E/S et le convertisseur série parallèle respectif (25) dans les modules de travail (23, 24) en particulier en tant qu'esclave de liaison d'E/S.

4. Dispositif selon l'une quelconque des revendications précédentes, **caractérisé en ce que** les branchements de communication (19, 20) sont conçus en tant que connexions enfichables pour l'enfichage des modules de travail (23, 24, 38) sur le module de bus (10).

5. Dispositif selon la revendication 4, **caractérisé en ce que** les branchements de communication (19, 20) sont disposés selon un agencement linéaire.

6. Dispositif selon l'une quelconque des revendications précédentes, **caractérisé en ce qu'**au moins un des modules de travail (23, 24) conçus en tant que modules de travail et/ou modules d'E/S possède des moyens de branchement (27) pour le branchement et/ou l'enfichage d'un système actionneur (28) comprenant au moins un actionneur (29).

7. Dispositif selon la revendication 6, **caractérisé en ce que** le système actionneur (28) est une batterie de vannes.

8. Dispositif selon l'une quelconque des revendications précédentes, **caractérisé en ce qu'**au moins un des modules de travail (23, 24) conçus en tant que modules actionneurs et/ou modules d'E/S possède au moins une interface d'E/S (26).

9. Dispositif selon la revendication 8, **caractérisé en ce que** ladite au moins une interface d'E/S (26) est conçue en tant que système de contacts enfichables.

10. Dispositif selon la revendication 8 ou 9, **caractérisé en ce que** ladite au moins une interface d'E/S (26) est conçue en tant qu'interface parallèle.

11. Dispositif selon l'une quelconque des revendications précédentes, **caractérisé en ce que** ledit au moins un des modules de travail (38) est conçu en tant que module fonctionnel.

12. Dispositif selon la revendication 11, **caractérisé en ce que** ledit au moins un module de travail (38) conçu en tant que module fonctionnel est un module détecteur et/ou un module actionneur.

13. Dispositif selon la revendication 11 ou 12, **caractérisé en ce que** ledit au moins un module de travail (38) conçu en tant que module fonctionnel possède une interface (39) pour la connexion à des équipements externes.
